(19) Europäisches Patentamt
European Patent Office
Office européen des brevets

(11) **EP 4 615 083 A1**

(12) **EUROPEAN PATENT APPLICATION**
published in accordance with Art. 153(4) EPC

(43) Date of publication:
**10.09.2025  Bulletin 2025/37**

(51) International Patent Classification (IPC):
*H04W 64/00* (2009.01)

(21) Application number: **23896701.2**

(52) Cooperative Patent Classification (CPC):
**H04L 5/00; H04L 43/0852; H04W 4/029; H04W 64/00**

(22) Date of filing: **25.11.2023**

(86) International application number:
**PCT/CN2023/134181**

(87) International publication number:
**WO 2024/114550 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.12.2022  CN 202211531315**

(71) Applicant: **Huawei Technologies Co., Ltd.
Shenzhen, Guangdong 518129 (CN)**

(72) Inventors:
• **CHENG, Weidong
  Shenzhen, Guangdong 518129 (CN)**
• **YOU, Lan
  Shenzhen, Guangdong 518129 (CN)**
• **SHEN, Yuxiang
  Shenzhen, Guangdong 518129 (CN)**
• **FU, Fangyang
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **POSITION DETERMINATION METHOD AND APPARATUS**

(57)     This application provides a location determining method and an apparatus. The method may be applied to a first network device. The method includes: sending first information and second information to each of a plurality of second network devices, where the first information indicates the second network device to determine a first delay of a pilot signal passing through a transmit channel and a receive channel of the second network device, and the second information indicates the second network device to send the pilot signal to one or more third network devices, and receive the pilot signal from the one or more third network devices; receiving the first delay of each second network device and one or more second delays; determining location information of each second network device based on an air interface delay between second network devices, where the air interface delay between the second network devices is determined based on the first delay of each second network device and the one or more second delays. This manner can improve efficiency of determining location information of the plurality of second network devices.

FIG. 4

## Description

This application claims priority to Chinese Patent Application No. 202211531315.X, filed with the China National Intellectual Property Administration on December 1, 2022 and entitled "LOCATION DETERMINING METHOD AND APPARATUS", which is incorporated herein by reference in its entirety.

## TECHNICAL FIELD

This application relates to the communication field, and in particular, to a location determining method and an apparatus.

## BACKGROUND

During actual engineering deployment of indoor base stations, due to a reason such as an incorrect manual installation location or the inability to install the indoor base station at a planned location point, a planned site location may be inconsistent with an actual installation location or the like. Therefore, operation and maintenance personnel cannot obtain actual installation locations of all indoor base stations in an area based on an installation design drawing. This is not conducive to subsequent operation and maintenance of the indoor base stations, and affects automatic and digital management of site device information assets.

Currently, during operation and maintenance or troubleshooting, the operation and maintenance personnel may search, based on information recorded in an installation process of a construction team, for a control node controlling the indoor base stations, and then search for locations of the indoor base stations through an interface of the control node.

However, the search manner has low efficiency, and once the construction team is changed, the recorded installation information is prone to being lost. Consequently, it is more difficult to search for the locations of the indoor base stations.

## SUMMARY

Embodiments of this application provide a location determining method and an apparatus, to improve efficiency of determining location information of a plurality of indoor base stations.

According to a first aspect, an embodiment of this application provides a location determining method, which may be applied to a first network device (for example, a device or a chip of the first network device). In the method, the first network device sends first information and second information to each of a plurality of second network devices, where the first information indicates the second network device to determine a first delay of a pilot signal passing through a transmit channel and a receive channel of the second network device, and the second information indicates the second network device to send the pilot signal to one or more third network devices, and receive the pilot signal from the one or more third network devices. The first network device receives the first delay of each second network device and one or more second delays, where each second delay of each second network device is a delay of the pilot signal from a transmit channel of each third network device to the receive channel of the second network device. The first network device determines location information of each second network device based on an air interface delay between second network devices.

The third network device is a network device other than the second network device in the plurality of second network devices, and the air interface delay between the second network devices is determined based on the first delay of each second network device and the one or more second delays.

In this embodiment of this application, the first network device sends the first information and the second information to each of one or more second network devices, so that the first network device can obtain the first delay determined by each second network device based on the pilot signal and the one or more second delays determined by receiving the pilot signal. Further, the first network device may determine the location information of each second network device based on the air interface delay between the second network devices, where the air interface delay between the second network devices is determined based on the first delay of each second network device and the one or more second delays.

It can be learned that the first network device may determine the location information of each of the plurality of second network devices by using the first delay and the one or more second delays that are fed back by each second network device. In comparison with a manner in which the location information of each second network device is determined through manual measurement, this manner can improve efficiency of determining location information of the plurality of second network devices, and improve accuracy of the location information of each second network device.

In an optional implementation, the second information specifically indicates the second network device to send the pilot signal to each of the one or more third network devices by using different first beams respectively in a plurality of first slots, and receive the pilot signal from each third network device by using different second beams respectively in a plurality of second slots.

In this manner, when sending the pilot signal to each of the one or more third network devices, each second network device sends the pilot signal to the third network device by using the different first beams respectively in the plurality of first slots; and when receiving the pilot signal from each third network device, each second network device receives the pilot signal from the third network device by using the different second beams respectively in the plurality of second slots. This helps increase beam gains of sending the pilot signal and receiving the pilot signal by each second network device, in other words, improve air interface quality of a radio link between the second network devices, and further helps improve accuracy of the location information of each second network device.

In an optional implementation, the second information specifically indicates the second network device to send the pilot signal to each of the one or more third network devices by using the different first beams respectively in the plurality of first slots, and receive the pilot signal from each third network device by using the different second beams respectively in the plurality of second slots. In this case, each second delay of each second network device is specifically a delay corresponding to an optimal beam pair, the optimal beam pair is a beam pair with a largest received signal-to-noise ratio in a plurality of first beams and a plurality of second beams.

In an optional implementation, the first network device may further receive beam information of one or more optimal beam pairs of each second network device. In this manner, the first network device may determine the location information of each second network device with reference to the beam information of the one or more optimal beam pairs of each second network device, and accuracy of the location information of each second network device may be further improved.

In an optional implementation, that the first network device determines the location information of each second network device based on the air interface delay between the second network devices includes: The first network device determines a distance between every two second network devices based on the air interface delay between the second network devices; and determines the location information of each second network device based on the distance between every two second network devices and location information of one or more fourth network devices. The fourth network device is a network device whose location information is known in the plurality of second network devices.

It can be learned that after the first network device determines the distance between every two second network devices based on the air interface delay between the second network devices, the first network device may determine location information of each remaining second network device based on known location information of a small quantity of second network devices, so that efficiency of determining the location information of the plurality of second network devices can be improved.

In an optional implementation, that the first network device determines the location information of each second network device based on the distance between every two second network devices and the location information of one or more fourth network devices includes: The first network device determines a spatial topology structure between the plurality of second network devices based on the distance between every two second network devices and the beam information of the optimal beam pairs of each second network device; and determines the location information of each second network device based on the distance between every two second network devices, the spatial topology structure, and the location information of the one or more fourth network devices.

In an optional implementation, the first network device may further compensate for delays of receive channels of every two second network devices in the plurality of second network devices based on the first delays of the plurality of second network devices and the second delays; and determine the air interface delay between the second network devices based on compensated delays of the receive channels of every two second network devices.

In an optional implementation, the first network device may further determine, based on a plurality of logical ports of a fifth network device, a second network device corresponding to each of the plurality of logical ports, where the fifth network device is a network device controlling the plurality of second network devices. This manner helps improve efficiency of searching for a faulty second network device in a subsequent operation and maintenance process of the plurality of second network devices.

According to a second aspect, this application further provides a location determining method. The location determining method in this aspect corresponds to the location determining method in the first aspect. The location determining method in this aspect is described from a second network device side (and may be applied to a device or a chip of the second network device). In the method, the second network device receives first information and second information, where the first information indicates the second network device to determine a first delay of a pilot signal passing through a transmit channel and a receive channel of the second network device, and the second information indicates the second network device to send the pilot signal to one or more third network devices, and receive the pilot signal from the one or more third network devices. The second network device determines the first delay based on the pilot signal. The second network device sends the pilot signal to the one or more third network devices. The second network device receives the pilot signal from the one or more third network devices, and determines one or more second delays. The second network device sends the first delay and the one or more second delays.

The third network device is a network device other than the second network device in a plurality of second network devices, and each of the one or more second delays is a delay of the pilot signal from a transmit channel of each third network device to the receive channel of the second network device.

In this embodiment of this application, the second network device receives the first information and the second information, determines the first delay based on the pilot signal, determines the one or more second delays by receiving the pilot signal, and then feeds back the first delay and the one or more second delays to a first network device. Therefore, the second network device determines location information of each second network device based on an air interface delay between second network devices, where the air interface delay between the second network devices is determined based on the first delay of each second network device and the one or more second delays, so that efficiency of determining location information of the plurality of second network devices is further improved.

In an optional implementation, the second information specifically indicates the second network device to send the pilot signal to each of the one or more third network devices by using different first beams respectively in a plurality of first slots, and receive the pilot signal from each third network device by using different second beams respectively in a plurality of second slots.

In this case, that the second network device sends the pilot signal to the one or more third network devices includes: The second network device sends the pilot signal to each of the one or more third network devices by using the different first beams respectively in the plurality of first slots. That the second network device receives the pilot signal from the one or more third network devices includes: The second network device receives the pilot signal from each third network device by using the different second beams respectively in the plurality of second slots. This manner helps increase beam gains of sending the pilot signal and receiving the pilot signal by each second network device, in other words, improve air interface quality of a radio link between the second network devices, and further helps improve accuracy of the location information of each second network device.

In an optional implementation, each second delay of the second network device is specifically a delay corresponding to an optimal beam pair; and the optimal beam pair is a beam pair with a largest received signal-to-noise ratio in a plurality of first beams and a plurality of second beams. This manner helps improve accuracy of the one or more second delays, and further helps improve accuracy of the location information of each second network device.

In an optional implementation, the second network device may further send beam information of one or more optimal beam pairs. In this manner, the first network device determines the location information of each second network device with reference to the beam information of the one or more optimal beam pairs of the second network device, and accuracy of the location information of each second network device may be further improved.

According to a third aspect, this application further provides a communication apparatus. The communication apparatus has a part or all of functions implementing the first network device in the first aspect, or has a part or all of functions implementing the second network device in the second aspect. For example, functions of the communication apparatus may have functions in some or all embodiments of the first network device in the first aspect of this application, or may have a function of independently implementing any one of embodiments of this application. The function may be implemented by hardware, or may be implemented by hardware by executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit.

The communication unit is configured to send first information and second information to each of a plurality of second network devices.

The first information indicates the second network device to determine a first delay of a pilot signal passing through a transmit channel and a receive channel of the second network device; and the second information indicates the second network device to send the pilot signal to one or more third network devices, and receive the pilot signal from the one or more third network devices, where the third network device is a network device other than the second network device in the plurality of second network devices.

The communication unit is further configured to receive the first delay of each second network device and one or more second delays, where each second delay of each second network device is a delay of the pilot signal from a transmit channel of each third network device to the receive channel of the second network device.

The processing unit is configured to determine location information of each second network device based on an air interface delay between second network devices, where the air interface delay between the second network devices is determined based on the first delay of each second network device and the one or more second delays.

In addition, for another optional implementation of the communication apparatus in this aspect, refer to related content of the first aspect. Details are not described herein again.

In another implementation, the communication apparatus includes a processing unit and a communication unit.

The communication unit is configured to receive first information and second information, where the first information indicates a second network device to determine a first delay of a pilot signal passing through a transmit channel and a receive channel of the second network device; and the second information indicates the second network device to send the pilot signal to one or more third network devices, and receive the pilot signal from the one or more third network devices, where the third network device is a network device other than the second network device in the plurality of second network devices.

The processing unit is configured to determine the first delay based on the pilot signal.

The communication unit is further configured to send the pilot signal to the one or more third network devices.

The processing unit is further configured to: receive the pilot signal from the one or more third network devices, and determine one or more second delays, where each of the one or more second delays is a delay of the pilot signal from a transmit channel of each third network device to the receive channel of the second network device.

The communication unit is further configured to send the first delay and the one or more second delays.

In addition, for another optional implementation of the communication apparatus in this aspect, refer to related content of the second aspect. Details are not described herein again.

In an example, the communication unit may be a transceiver or a communication interface, the storage unit may be a memory, and the processing unit may be a processor.

In an implementation, the communication apparatus includes a processor and a transceiver.

The transceiver is configured to send first information and second information to each of a plurality of second network devices.

The first information indicates the second network device to determine a first delay of a pilot signal passing through a transmit channel and a receive channel of the second network device; and the second information indicates the second network device to send the pilot signal to one or more third network devices, and receive the pilot signal from the one or more third network devices, where the third network device is a network device other than the second network device in the plurality of second network devices.

The transceiver is further configured to receive the first delay of each second network device and one or more second delays, where each second delay of each second network device is a delay of the pilot signal from a transmit channel of each third network device to the receive channel of the second network device.

The processor is configured to determine location information of each second network device based on an air interface delay between second network devices, where the air interface delay between the second network devices is determined based on the first delay of each second network device and the one or more second delays.

In addition, for another optional implementation of the communication apparatus in this aspect, refer to related content of the first aspect. Details are not described herein again.

In another implementation, the communication apparatus includes a processor and a transceiver.

The transceiver is configured to receive first information and second information, where the first information indicates a second network device to determine a first delay of a pilot signal passing through a transmit channel and a receive channel of the second network device; and the second information indicates the second network device to send the pilot signal to one or more third network devices, and receive the pilot signal from the one or more third network devices, where the third network device is a network device other than the second network device in the plurality of second network devices.

The processor is configured to determine the first delay based on the pilot signal.

The transceiver is further configured to send the pilot signal to the one or more third network devices.

The processor is further configured to: receive the pilot signal from the one or more third network devices, and determine one or more second delays, where each of the one or more second delays is a delay of the pilot signal from a transmit channel of each third network device to the receive channel of the second network device.

The transceiver is further configured to send the first delay and the one or more second delays.

In addition, for another optional implementation of the communication apparatus in this aspect, refer to related content of the second aspect. Details are not described herein again.

In another implementation, the communication apparatus is a chip or a chip system. The processing unit may also be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processor and a multimedia processor) may be integrated on a same chip. Such a chip may be referred to as a system-on-a-chip (system-on-a-chip, SoC). Whether the components are independently disposed on different chips or integrated and disposed on one or more chips usually depends on a requirement of a product design. An implementation form of the component is not limited in embodiments of this application.

According to a fourth aspect, this application further provides a processor, configured to perform the foregoing methods. In a process of performing the methods, a process of sending the information and a process of receiving the information in the foregoing methods may be understood as a process of outputting the information by the processor and a process of receiving the input information by the processor. When outputting the information, the processor outputs the information to a transceiver, so that the transceiver transmits the information. After the information is output by the processor, other processing may further need to be performed on the information before the information arrives at the transceiver. Similarly, during receiving of the input information by the processor, the transceiver receives the information, and inputs the information to the processor. Further, after the transceiver receives the information, other processing may need to be performed on the information before the information is input into the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform the methods, or a processor, for example, a general-purpose processor, that executes computer instructions in the memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a fifth aspect, this application further provides a communication system. The system includes a network device and a terminal device. In another possible design, the system may further include another device that interacts with the network device and the terminal device. In this embodiment of this application, a first network device is the network device in the communication system, and a second network device is an indoor base station.

According to a sixth aspect, this application provides a computer-readable storage medium, configured to store instructions. When the instructions are run by a computer, the method according to either of the first aspect and the second aspect is implemented.

According to a seventh aspect, this application further provides a computer program product including instructions. When the computer program product runs on a computer, the method according to either of the first aspect and the second aspect is implemented.

According to an eighth aspect, this application provides a chip system. The chip system includes a processor and an interface. The interface is configured to obtain a program or instructions. The processor is configured to invoke the program or the instructions to implement or support a first network device in implementing the functions in the first aspect, or implement or support a second network device in implementing the functions in the second aspect, for example, determining or processing at least one of data and information in the foregoing method. In a possible design, the chip system further includes a memory. The memory is configured to store program instructions and data that are necessary for the first network device. The chip system may include a chip, or may include a chip and another discrete component.

According to a ninth aspect, this application provides a communication apparatus including a processor, configured to execute a computer program or executable instructions stored in a memory. When the computer program or the executable instructions are executed, the apparatus is enabled to perform the method according to the possible implementations of the first aspect or the second aspect.

In a possible implementation, the processor and the memory are integrated together.

In another possible implementation, the memory is located outside the communication apparatus.

For beneficial effects of the third aspect to the ninth aspect, refer to the beneficial effects of the first aspect and the second aspect. Details are not described herein again.

## BRIEF DESCRIPTION OF DRAWINGS

FIG. 1 is a diagram of a system structure of a communication system according to an embodiment of this application;
FIG. 2 is a diagram of performing signal strength measurement at N points near a to-be-measured pRRU according to an embodiment of this application;
FIG. 3a is a diagram of a planned connection between an RHUB and a pRRU according to an embodiment of this application;

FIG. 3b is a diagram of an actual physical connection between an RHUB and a pRRU according to an embodiment of this application;

FIG. 4 is a diagram of interaction in a location information determining method according to an embodiment of this application;

FIG. 5 is a diagram of interaction between a first network device and a pRRU according to an embodiment of this application;

FIG. 6 is another diagram of interaction between a first network device and a pRRU according to an embodiment of this application;

FIG. 7 is a schematic of a spatial topology structure between a plurality of pRRUs according to an embodiment of this application;

FIG. 8 is a diagram of determining a pRRU-1 corresponding to a logical port 1 according to an embodiment of this application;

FIG. 9 is another diagram of a system architecture according to an embodiment of this application;

FIG. 10A and FIG. 10B are a diagram of interaction between a first network device and a plurality of pRRUs according to an embodiment of this application;

FIG. 11 is a diagram of a structure of a communication apparatus according to an embodiment of this application; and

FIG. 12 is another diagram of a structure of a communication apparatus according to an embodiment of this application.

## DESCRIPTION OF EMBODIMENTS

The following clearly and completely describes the technical solutions in embodiments of this application with reference to the accompanying drawings in embodiments of this application.

To better understand a location determining method disclosed in embodiments of this application, a communication system to which embodiments of this application are applicable is described.

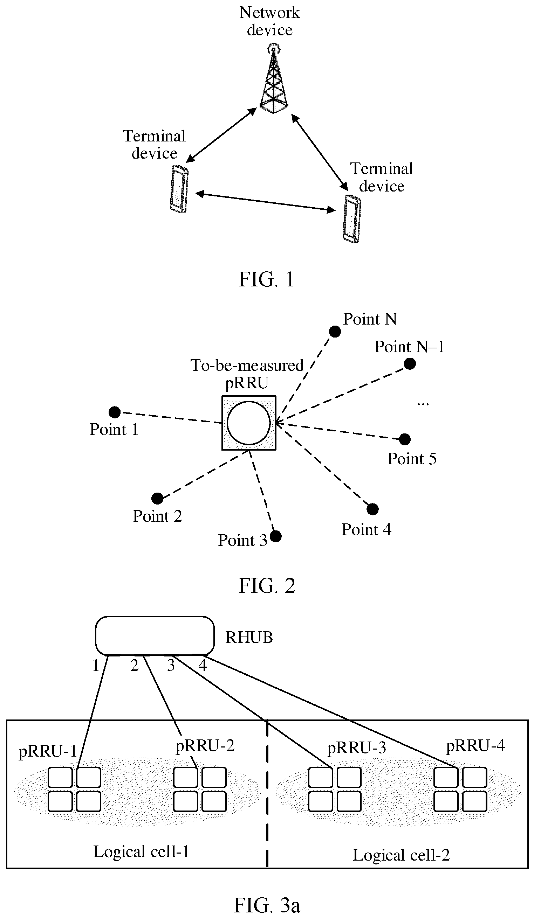

Embodiments of this application may be applied to a wireless communication system like a long term evolution (long term evolution, LTE) system, a 5th generation (5th generation, 5G) mobile communication system, an evolved system after 5G like a 6th generation (6th generation, 6G) mobile communication system, a satellite communication system, and a short-range system. A system architecture is shown in FIG. 1. The wireless communication system may include one or more network devices and one or more terminal devices. The wireless communication system may also perform point-to-point communication. For example, a plurality of terminal devices communicate with each other.

It may be understood that the wireless communication system mentioned in embodiments of this application includes but is not limited to a narrowband-internet of things (narrowband-internet of things, NB-IoT) system, a long LTE system, three application scenarios of a 5G/6G mobile communication system: enhanced mobile broadband (enhanced mobile broadband, eMBB), ultra-reliable low-latency communication (ultra-reliable low-latency communication, URLLC), and massive machine-type communications (massive machine-type communications, mMTC), a wireless fidelity (wireless fidelity, Wi-Fi) system, and the like.

In embodiments of this application, the network device is a device having a wireless transceiver function, is configured to communicate with the terminal device, and may be an evolved NodeB (evolved NodeB, eNB or eNodeB) in LTE, a base station in a 5G/6G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (which is also referred to as a small cell), a relay station, an access point, a future device for implementing a function of a base station, an access point (access point, AP) in a Wi-Fi system, a transmission reception point (transmitting and receiving point, TRP), a transmitting point (transmitting point, TP), a mobile switching center, a device that implements a function of a base station, in device-to-device (device-to-device, D2D), vehicle-to-everything (vehicle-to-everything, V2X), and machine-to-machine (machine-to-machine, M2M) communication, a device that implements a function of a base station in an evolved communication system after 5G, an integrated access and backhaul (integrated access and backhaul, IAB), a central unit (central unit, CU) and a distributed unit (distributed unit, DU) in a cloud access network (cloud radio access network, C-RAN) system, and a network device in a non-terrestrial network (non-terrestrial network, NTN) communication system, that is, may be deployed on a high-altitude platform or a satellite, and may further be various devices that form an access node, for example, an active antenna processing unit (active antenna unit, AAU) and a baseband unit (baseband unit, BBU). This is not specifically limited in embodiments of this application.

The network device may communicate and interact with a core network device, to provide a communication service for the terminal device. The core network device is, for example, a device in a 5G network core network (core network, CN). As a bearer network, the core network provides an interface for a data network, provides communication connection, authentication, management, and policy control for a terminal, bears a data service, and the like.

The terminal device in embodiments of this application may include various devices with a wireless communication function, for example, a handheld device, a vehicle-mounted device, a wearable device, a computing device, or another processing device connected to a wireless modem. The terminal device may also be referred to as a terminal. The terminal device may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a smart point of sale (point of sale, POS) machine, a customer-premises equipment (customer-premises equipment, CPE), a machine type communication (machine type communication, MTC) terminal, a communication device mounted on a high-altitude airplane, a wearable device, an uncrewed aerial vehicle, a robot, a terminal in D2D, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

Embodiments of this application are applicable to a communication scenario including a first network device and a plurality of second network devices. The first network device may be a network device in the foregoing wireless communication system. The first network device may be considered as a base station control unit, and may implement base station control instruction sending and signal processing. The second network device is an indoor base station, for example, a pico base station remote radio unit (pico remote radio unit, pRRU). The pRRU is used as a remote radio unit of the indoor base station to implement a radio frequency signal processing function.

Embodiments of this application may also be applied to a scenario in which deployment locations of a plurality of radars are calculated in a radar networking system.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Currently, during routine operation and maintenance and troubleshooting of an indoor base station, operation and maintenance personnel may search, based on information recorded in an installation process of a construction team, for a control node (for example, a remote radio unit hub (Remote Radio Unit Hub, RHUB)) controlling the indoor base station, and then search for a location of the corresponding indoor base station through an interface of the control node. However, the search manner is low in efficiency. The RHUB is configured to aggregate and forward data, to configure a plurality of pRRUs to provide wireless coverage for a plurality of indoor floors or areas. Therefore, the RHUB is a control node controlling the plurality of pRRUs.

The operation and maintenance personnel may further carry a test device to perform signal strength measurement at a plurality of points near a to-be-measured pRRU along a predesigned test route, to determine location information of the to-be-measured pRRU. FIG. 2 is a diagram of performing signal strength measurement at N points near a to-be-measured pRRU. Operation and maintenance personnel calculate information about distances between different test points and the to-be-measured pRRU based on tested received signal strength and a space path loss empirical model. Then, the operation and maintenance personnel determine location information of the to-be-measured pRRU in a multi-point distance locating manner based on location coordinates of the test points recorded by a test device. A process of determining the location information of the to-be-measured pRRU depends on the space path loss empirical model. If a matching error between an air interface channel environment near the to-be-measured pRRU and the space path loss empirical model is large, a large error occurs on a location of the to-be-measured pRRU.

The operation and maintenance personnel may further use a distance measuring instrument to measure a distance between each to-be-measured pRRU and a reference origin (a reference point in the environment) or a reference plane (a reference plane in the environment) to calibrate location coordinates of the pRRU. This measurement manner is time-consuming, costly, and low-efficient, and is prone to introduce a manual operation error. Therefore, automatic site operation and maintenance cannot be implemented.

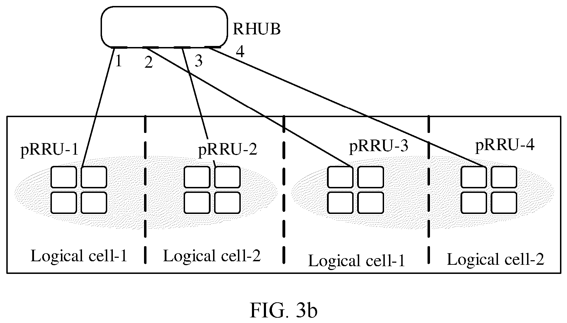

In addition, a connection between an RHUB and the pRRU depends on a manual connection, and a case such as an incorrect connection between an RHUB port and the pRRU is prone to occur. For example, FIG. 3a is a diagram of a planned connection between an RHUB and a pRRU. As shown in FIG. 3a, in a planned connection relationship between the RHUB and the pRRU, a logical port 1 of the RHUB is connected to a pRRU-1 in a logical cell-1, a logical port 2 of the RHUB is connected to a pRRU-2 in the logical cell-1, a logical port 3 of the RHUB is connected to a pRRU-3 in a logical cell-2, and a logical port 4 of the RHUB is connected to a pRRU-4 in the logical cell-2. FIG. 3b is a diagram of an actual physical connection between an RHUB and a pRRU. As shown in FIG. 3b, in the actual physical connection between the RHUB and the pRRU, a logical port 1 of the RHUB is connected to a pRRU-1 in a logical cell-1, a logical port 2 of the RHUB is connected to a pRRU-3 in the logical cell-1, a logical port 3 of the RHUB is connected to a pRRU-2 in a logical cell-2, and a logical port 4 of the RHUB is connected to a pRRU-4 in the logical cell-2. Inconsistence between the planned connection topology and the physical connection between the RHUB and the pRRU makes it difficult to search for and identify the pRRU, and also increases network interference, resulting in a decrease in network performance indicators and deterioration of user experience.

An embodiment of this application provides a location information determining method. In the location information-determining method, a second network device sends first information and second information to each of a plurality of second network devices, where the first information indicates the second network device to determine a first delay of a pilot signal passing through a transmit channel and a receive channel of the second network device, and the second information indicates the second network device to send the pilot signal to one or more third network devices, and receive the pilot signal from the one or more third network devices. Each of the plurality of second network devices receives the first information and the second information. Each second network device determines the first delay based on the pilot signal, and determines one or more second delays by receiving the pilot signal. Each second network device feeds back the first delay of the second network device and the one or more second delays to a first network device. Therefore, the first network device determines location information of each second network device based on an air interface delay between second network devices, where the air interface delay between the second network devices is determined based on the first delay of each second network device and the one or more second delays.

It can be learned that the first network device may determine the location information of each of the plurality of second network devices by using the first delay and the one or more second delays that are fed back by each second network device. In comparison with a manner in which the location information of each second network device is determined through manual measurement, this manner can improve efficiency of determining location information of the plurality of second network devices, and improve accuracy of the location information of each second network device.

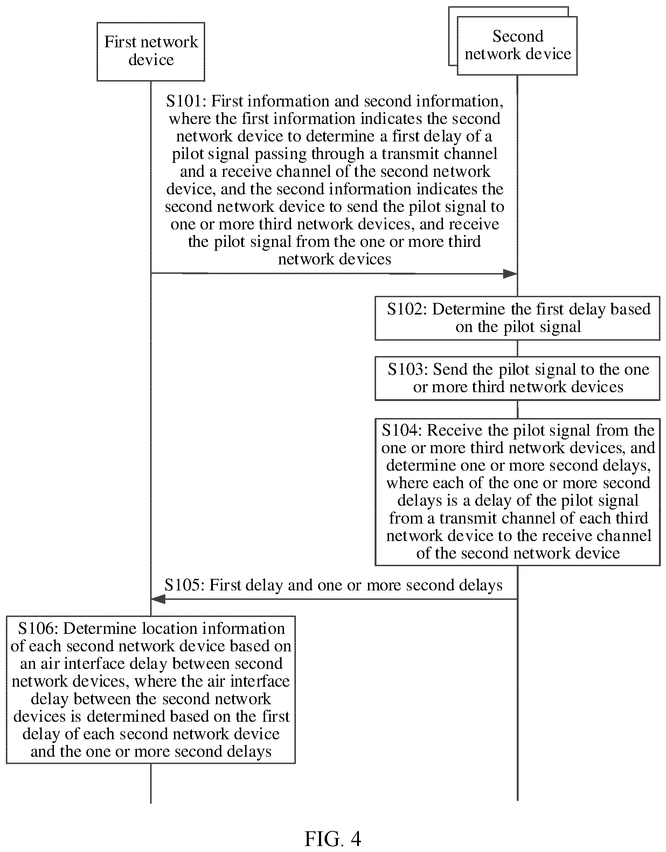

An embodiment of this application provides a location information determining method. FIG. 4 is a diagram of interaction in the location information determining method. The location information determining method is described from a perspective of interaction between a first network device and a plurality of second network devices. The location information determining method includes but is not limited to the following steps.

S101: The first network device sends first information and second information to each of the plurality of second network devices, where the first information indicates the second network device to determine a first delay of a pilot signal passing through a transmit channel and a receive channel of the second network device, and the second information indicates the second network device to send the pilot signal to one or more third network devices, and receive the pilot signal from the one or more third network devices. Correspondingly, each of the plurality of second network devices receives the first information and the second information.

The third network device is a network device other than the second network device in the plurality of second network devices.

Each of the plurality of second network devices includes a transmit channel and a receive channel. The transmit channel is configured to send a signal, and the receive channel is configured to receive the signal. For each second network device, the first delay is a delay of the pilot signal passing through the transmit channel and the receive channel of the second network device, to be specific, the first delay is a delay of sending, by the second network device, the pilot signal to the receive channel of the second network device through the transmit channel of the second network device.

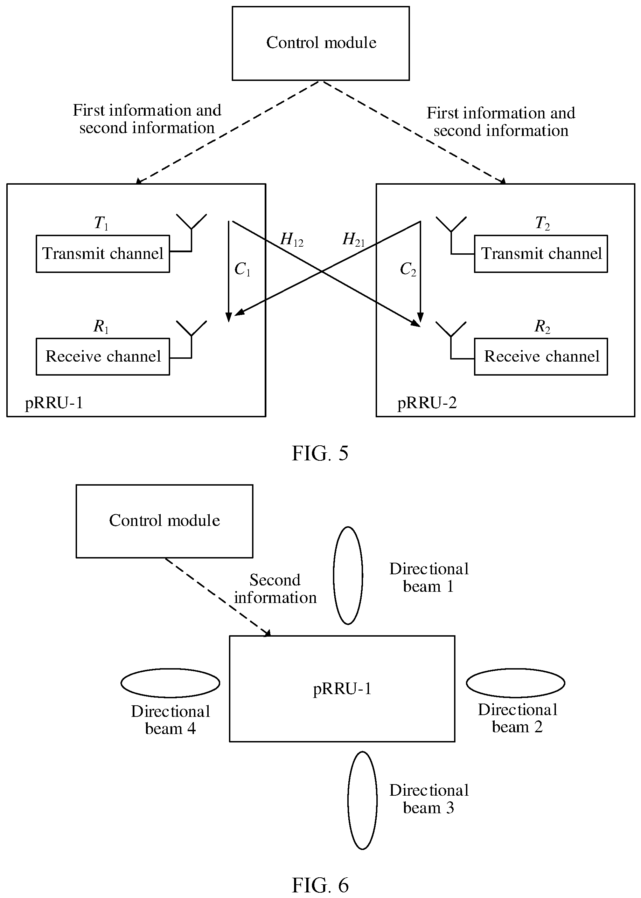

For example, the plurality of second network devices include a pRRU-1 and a pRRU-2, and the first network device includes a control module. FIG. 5 is a diagram of interaction between the control module of the first network device and the pRRU-1 and the pRRU-2. As shown in FIG. 5, the first network device sends the first information and the second information to the pRRU-1 and the pRRU-2 by using the control module. Delays of transmit channels of the pRRU-1 and the pRRU-2 are $T_1$ and $T_2$ respectively, delays of receive channels of the pRRU-1 and the pRRU-2 are $R_1$ and $R_2$ respectively, and delays of self-loopback air interfaces of the pRRU-1 and the pRRU-2 are $C_1$ and $C_2$ respectively. The delay of the self-loopback air interface of the pRRU-1 is a delay of transferring the pilot signal inside the pRRU-1. The delay of the self-loopback air interface of the pRRU-2 is a delay of transferring the pilot signal inside the pRRU-2.

The first delay is the delay of the pilot signal passing through the transmit channel and the receive channel of the second network device, or may be understood as a delay of the pilot signal passing through the transmit channel, a self-loopback air interface, and the receive channel of the second network device. The self-loopback air interface is an air interface through which the pilot signal is transferred inside the second network device. In this case, for FIG. 5, a delay of the pilot signal passing through the transmit channel, the self-loopback air interface, and the receive channel of the pRRU-1, that is, a first delay $t_{11}$ of the pRRU-1 is $T_1 + C_1 + R_1$, and a delay of the pilot signal passing through the transmit channel, the self-loopback air interface, and the receive channel of the pRRU-2, that is, a first delay $t_{22}$ of the pRRU-2 is $T_2 + C_2 + R_2$.

The first network device sends the first information to each second network device. This helps each second network device determine the first delay based on the pilot signal, and further helps the first network device obtain the first delay of each second network device required for determining location information of each second network device.

That the second information sent by the first network device to each second network device indicates the second network device to send the pilot signal to the one or more third network devices, and receive the pilot signal from the one or more third network devices may be understood as follows: The second information of each second network device indicates the second network device to send the pilot signal to a network device other than the second network device in the plurality of second network devices, and receive the pilot signal from the network device other than the second network device in the plurality of second network devices. In this manner, the first network device may control the plurality of second network devices to send the pilot signal to each other. This helps each second network device determine a second delay by receiving the pilot signal from another network device, and further helps the first network device obtain one or more second delays of each second network device required for determining the location information of each second network device.

For example, the plurality of second network devices include a pRRU-1, a pRRU-2, and a pRRU-3. The second information sent by the first network device to the pRRU-1 indicates the pRRU-1 to send the pilot signal to the pRRU-2 and the pRRU-3, and receive the pilot signal from the pRRU-2 and the pRRU-3. The second information sent by the first network device to the pRRU-2 indicates the pRRU-2 to send the pilot signal to the pRRU-1 and the pRRU-3, and receive the pilot signal from the pRRU-1 and the pRRU-3. The second information sent by the first network device to the pRRU-3 indicates the pRRU-3 to send the pilot signal to the pRRU-1 and the pRRU-2, and receive the pilot signal from the pRRU-1 and the pRRU-2.

In an optional implementation, a plurality of directional beams are preconfigured for each of the plurality of second network devices, and the plurality of directional beams of each second network device include a plurality of first beams and a plurality of second beams. Therefore, each second network device may send a signal and receive the signal by using the plurality of directional beams, so that beam gains of transmitting a signal and receiving the signal by each second network device can be increased, in other words, air interface quality of a radio link between the second network devices is improved.

In an optional implementation, when a plurality of directional beams are preconfigured for each of the plurality of second network devices, the second information specifically indicates the second network device to send the pilot signal to each of the one or more third network devices by using different first beams respectively in a plurality of first slots, and receive the pilot signal from each third network device by using different second beams respectively in a plurality of second slots.

In other words, when the plurality of directional beams are preconfigured for each of the plurality of second network devices, and when the first network device controls, by using the second information, each second network device to send the pilot signal to each of the one or more third network devices, the pilot signal is sent to the third network device by using the different first beams respectively in the plurality of first slots; and when the first network device controls, by using the second information, each second network device to receive the pilot signal from each third network device, the pilot signal from the third network device is received by using the different second beams respectively in the plurality of second slots.

For example, the first network device includes a control module. FIG. 6 is a diagram in which the first network device sends the second information to a pRRU-1 by using the control module. As shown in FIG. 6, directional beams in four directions, namely, a directional beam 1, a directional beam 2, a directional beam 3, and a directional beam 4, are configured for the pRRU-1. Therefore, the first network device may send the second information to the pRRU-1 by using the control module, to control the pRRU-1 to send the pilot signal and receive the pilot signal by using different directional beams in different slots. For example, the second information indicates the pRRU-1 to send the pilot signal to a pRRU-2 by using the directional beam 1, the directional beam 2, the directional beam 3, and the directional beam 4 respectively in different slots, and receive the pilot signal from the pRRU-2 by using the directional beam 1, the directional beam 2, the directional beam 3, and the directional beam 4 respectively in different slots.

For example, the plurality of second network devices include a pRRU-1, a pRRU-2, and a pRRU-3. For the pRRU-1, the third network devices are the pRRU-2 and the pRRU-3. The first network device indicates, by using the second information, the pRRU-1 to send the pilot signal to the pRRU-2 by using a beam 1 and a beam 2 respectively in a slot 1 and a slot 2, receive the pilot signal from the pRRU-2 by using a beam 3 and a beam 4 respectively in a slot 3 and a slot 4, send the pilot signal to the pRRU-3 by using the beam 1 and the beam 2 respectively in a slot 5 and a slot 6, and receive the pilot signal from the pRRU-3 by using the beam 3 and the beam 4 respectively in a slot 7 and a slot 8.

The first network device controls, by using the second information, each second network device to send the pilot signal to the third network device by using the different first beams respectively in the plurality of first slots, and receive the pilot signal from the third network device by using the different second beams respectively in the plurality of second slots, so that each second network device can determine the one or more second delays according to a principle of a largest received signal-to-noise ratio. This helps improve calculation accuracy of a distance between the second network devices, and further helps improve accuracy of the location information of the second network devices.

It may be understood that the first information and the second information may be different control information, or may be same control information. This is not limited in this embodiment of this application. Both the first information and the second information may be understood as control signaling delivered by the first network device to each second network device.

S102: The second network device determines the first delay based on the pilot signal.

The second network device is any network device in the plurality of second network devices.

It may be understood that the first information of each second network device indicates the second network device to determine the first delay of the pilot signal passing through the transmit channel and the receive channel of the second network device, so that each of the plurality of second network devices determines the first delay based on the pilot signal.

That the second network device determines the first delay based on the pilot signal includes: The pilot signal passes through the transmit channel and the receive channel of the second network device, and the second network device determines the first delay based on time at which the pilot signal is sent from the transmit channel of the second network device and time at which the pilot signal is received through the receive channel.

The first delay may also be understood as duration of the pilot signal from the transmit channel of the second network device to the receive channel of the second network device. Therefore, each second network device determines the duration of the pilot signal from the transmit channel of the second network device to the receive channel of the second network device as the first delay of the second network device.

S103: The second network device sends the pilot signal to the one or more third network devices.

It may be understood that each second network device sends the pilot signal to a network device other than the second network device in the plurality of second network devices, so that each second network device receives the pilot signal from another network device in the plurality of second network devices.

For example, the plurality of second network devices include a pRRU-1, a pRRU-2, and a pRRU-3. The pRRU-1 sends the pilot signal to the pRRU-2 and the pRRU-3, the pRRU-2 sends the pilot signal to the pRRU-1 and the pRRU-3, and the pRRU-3 sends the pilot signal to the pRRU-1 and the pRRU-2.

In an optional implementation, that the second network device sends the pilot signal to the one or more third network devices includes: The second network device sends the pilot signal to each of the one or more third network devices by using different first beams in the plurality of first slots. In other words, the second network device sends the pilot signal to each third network device by using different first beams respectively in different slots.

For example, the plurality of second network devices include a pRRU-1, a pRRU-2, and a pRRU-3. For the pRRU-1, the third network devices are the pRRU-2 and the pRRU-3. The pRRU-1 sends the pilot signal to the pRRU-2 by using a beam 1 and a beam 2 respectively in a slot 1 and a slot 2, and sends the pilot signal to the pRRU-3 by using the beam 1 and the beam 2 respectively in a slot 5 and a slot 6.

S104: The second network device receives the pilot signal from the one or more third network devices, and determines the one or more second delays, where each of the one or more second delays is a delay of the pilot signal from a transmit channel of each third network device to the receive channel of the second network device.

Each second network device sends the pilot signal to a network device other than the second network device in the plurality of second network devices, so that each second network device can receive the pilot signal from the network device other than the second network device in the plurality of second network devices, that is, each second network device may receive the pilot signal from the one or more third network devices.

That each second delay of each second network device is the delay of the pilot signal from the transmit channel of the third network device to the receive channel of the second network device may be understood as that each second delay is duration of the pilot signal from the transmit channel of each third network device to the receive channel of the second network device. Therefore, each second network device may determine, based on time at which each third network device sends the pilot signal to the second network device and time at which the pilot signal from the third network device is received, the second delay of receiving the pilot signal from the third network device. Each second network device may receive the pilot signal from the one or more third network devices, so that each second network can determine the one or more second delays.

For example, the plurality of second network devices include a pRRU-1, a pRRU-2, and a pRRU-3. For the pRRU-1, the pRRU-1 may determine a second delay #1 based on time at which the pRRU-2 sends the pilot signal to the pRRU-1 and time at which the pilot signal from the pRRU-2 is received. The pRRU-1 may further determine a second delay #2 based on time at which the pRRU-3 sends the pilot signal to the pRRU-1 and time at which the pilot signal from the pRRU-3 is received. Similarly, the pRRU-2 and the pRRU-3 may each determine two second delays.

In an optional implementation, that the second network device receives the pilot signal from the one or more third network devices includes: The second network device receives the pilot signal from each of the one or more third network devices by using the second beams respectively in the plurality of second slots. In other words, the second network device may receive the pilot signal from each third network device by using different second beams respectively in different slots.

For example, the plurality of second network devices include a pRRU-1, a pRRU-2, and a pRRU-3. For the pRRU-1, the third network devices are the pRRU-2 and the pRRU-3. The pRRU-1 receives the pilot signal from the pRRU-2 by using a beam 3 and a beam 4 respectively in a slot 3 and a slot 4, and receives the pilot signal from the pRRU-3 by using the beam 3 and the beam 4 respectively in a slot 7 and a slot 8.

It may be understood that when each second network sends the pilot signal to each third network device by using different first beams in different slots, and receives the pilot signal from each third network device by using different second beams in different slots, the plurality of first beams used by each second network device to send the pilot signal to each third network device and a plurality of beams used by each third network device to receive the pilot signal from the second network device may be considered as a group of beam pairs.

For example, the plurality of second network devices include a pRRU-1, a pRRU-2, and a pRRU-3. For the pRRU-1, the third network devices are the pRRU-2 and the pRRU-3. The pRRU-1 sends the pilot signal to the pRRU-2 by using a beam 1 in a slot 1, and correspondingly, the pRRU-2 receives the pilot signal from the pRRU-1 by using a beam 1' in the slot 1, where the beam 1 and the beam 1' may form a beam pair 1. The pRRU-1 sends the pilot signal to the pRRU-2 by using a beam 2 in a slot 2, and correspondingly, the pRRU-2 receives the pilot signal from the pRRU-1 by using a beam 2' in the slot 2, where the beam 2 and the beam 2' may form a beam pair 2. The pRRU-1 sends the pilot signal to the pRRU-3 by using a beam 3 in a slot 3, and correspondingly, the pRRU-3 receives the pilot signal from the pRRU-3 by using a beam 3' in the slot 3, where the beam 3 and the beam 3' may form a beam pair 3. The pRRU-1 sends the pilot signal to the pRRU-3 by using a beam 4 in a slot 4, and correspondingly, the pRRU-3 receives the pilot signal from the pRRU-1 by using a beam 4' in the slot 4, where the beam 4 and the beam 4' may form a beam pair 4.

In this implementation, each second delay of each second network device is specifically a delay corresponding to an optimal beam pair, and the optimal beam pair is a beam pair with a largest received signal-to-noise ratio in the plurality of first beams and the plurality of second beams. In other words, when each second network sends the pilot signal to each third network device by using different first beams in different slots, and receives the pilot signal from each third network device by using different second beams in different slots, each second delay of each second network device is a delay of receiving, by the second network device, the pilot signal from the third network device by using the optimal beam pair. In addition, when the second network device receives the pilot signal from the third network device by using the optimal beam pair, a received signal-to-noise ratio is compared with a signal-to-noise ratio obtained when the pilot signal from the third network device is received by using another beam pair. The signal-to-noise ratio obtained when the second network device receives the pilot signal from the third network device by using the optimal beam pair is the largest.

For example, the plurality of second network devices include a pRRU-1 and a pRRU-2. For the pRRU-1, the third network device is the pRRU-2. The pRRU-1 sends the pilot signal to the pRRU-2 by using a beam 1 in a slot 1, and correspondingly, the pRRU-2 receives the pilot signal from the pRRU-1 by using a beam 1' in the slot 1. The pRRU-1 sends the pilot signal to the pRRU-2 by using a beam 2 in a slot 2, and correspondingly, the pRRU-2 receives the pilot signal from the pRRU-1 by using a beam 2' in the slot 2. A signal-to-noise ratio obtained when the pRRU-2 receives the pilot signal from the pRRU-1 by using the beam 2' in the slot 2 is greater than a signal-to-noise ratio obtained when the pilot signal from the pRRU-1 is received by using the beam 1' in the slot 1. In this case, a second delay of receiving, by the pRRU-2, the pilot signal from the pRRU-1 is a delay corresponding to a beam pair formed by the beam 2 and the beam 2', and may also be understood as a delay of sending, by the pRRU-1, the pilot signal to the pRRU-2 by using the beam 2 in the slot 2 and receiving, by the pRRU-2, the pilot signal from the pRRU-1 by using the beam 2' in the slot 2.

In this implementation, accuracy of each of the one or more second delays may be improved, and accuracy of the location information of each second network device determined by the first network device based on the one or more second delays of each second network device may be further improved.

An execution sequence of S102 to S104 is not limited in this embodiment of this application. In other words, S102 may be performed before S103 and S104, or may be performed after S103 and S104. Similarly, S103 may be performed before S102 and S104, or may be performed after S102 and S104; and S104 may be performed before S102 and S103, or may be performed after S102 and S103.

S105: The second network device sends the first delay and the one or more second delays. Correspondingly, the first network device receives the first delay of each second network device and the one or more second delays.

It may be understood that each of the plurality of second network devices sends the first delay of the second network device and the one or more second delays to the first network device, so that the first network device obtains delay information required for determining the location information of each second network device.

In an optional implementation, each second network device may further record one or more optimal beam pairs, to be specific, record beam direction information and beam angle information of an optimal beam pair corresponding to a largest signal-to-noise ratio received when the pilot signal from each third network device is received.

Optionally, each second network device may further send the one or more optimal beam pairs of the second network device to the first network device. Correspondingly, the first network device may further receive the one or more optimal beam pairs from each second network device. This manner helps the first network device make a reference to beam direction information and beam angle information of each of the one or more optimal beam pairs of each second network device when determining the location information of each second network device, and further helps improve accuracy of the location information of each second network device.

S106: The first network device determines the location information of each second network device based on an air interface delay between second network devices, where the air interface delay between the second network devices is determined based on the first delay of each second network device and the one or more second delays.

In an optional implementation, the first network device may further compensate for delays of receive channels of every two second network devices in the plurality of second network devices based on the first delays of the plurality of second network devices and the one or more second delays, and then determine the air interface delay between the second network devices based on compensated delays of the receive channels of every two second network devices.

That the first network device compensates for the delays of the receive channels of every two second network devices in the plurality of second network devices based on the first delays of the plurality of second network devices and the one or more second delays may also be understood as that the first network device aligns the delays of the receive channels of the two second network devices based on first delays of every two second network devices in the plurality of second network devices and the one or more second delays; and may further be understood as that the first network device compensates for a delay of a receive channel of one of the two second network devices when enabling the delays of the receive channels of every two second network devices to be the same.

For example, as shown in FIG. 5, the plurality of second network devices include the pRRU-1 and the pRRU-2. In FIG. 5, $H_{12}$ represents an air interface delay of pRRU-1 sending and pRRU-2 receiving, and $H_{21}$ represents an air interface delay of pRRU-2 sending and pRRU-1 receiving. It is assumed that a first delay determined by the pRRU-1 is $t_{11}$, and a second delay determined by the pRRU-1 is $t_{21}$; and a first delay determined by the pRRU-2 is $t_{22}$, and a second delay determined by the pRRU-2 is $t_{12}$. In this case, a relationship of each delay is as follows:

$$t_{11} = T_1 + C_1 + R_1 \qquad\qquad (1)$$

$$t_{21} = T_2 + H_{21} + R_1 \qquad\qquad (2)$$

$$t_{22} = T_2 + C_2 + R_2 \qquad\qquad (3)$$

$$t_{12} = T_1 + H_{12} + R_2 \qquad\qquad (4)$$

The first network device may learn, based on channel reciprocity of receiving and sending air interfaces between the pRRU-1 and the pRRU-2, that $H_{12} = H_{21}$. In addition, if impact of a difference between delays $C_1$ and $C_2$ of self-loopback air interfaces of different pRRUs is ignored, that is, $C_1 \approx C_2$, the following may be obtained by using the formula (1) to the formula (4):

$$R_1 - R_2 = \frac{1}{2}\left(t_{21} - t_{12} + t_{11} - t_{22}\right) \qquad\qquad (5)$$

It can be learned from the formula (5) that the first network device may determine a difference value between the receive channel of the pRRU-1 and the receive channel of the pRRU-2 based on the first delay $t_{11}$ and the second delay $t_{21}$ of the pRRU-1 and the first delay $t_{22}$ and the second delay $t_{12}$ of the pRRU-2. Therefore, the first network device may enable a delay $R_1$ of the receive channel of the pRRU-1 to be equal to a delay $R_2$ of the receive channel of the pRRU-2, and align the delays of the receive channels of the pRRU-1 and the pRRU-1. In other words, when enabling the delay $R_1$ of the receive channel of the pRRU-1 to be equal to the delay $R_2$ of the receive channel of the pRRU-2, the first network device compensates for the delay of the receive channel of the pRRU-1 or the pRRU-1. For example, the first network device increases the delay $R_1$ of the receive channel of the pRRU-1 by $R_1 - R_2$, or decreases the delay $R_2$ of the receive channel of the pRRU-1 by $R_1 - R_2$.

After compensating for the delays of the receive channels of the pRRU-1 and the pRRU-1, the first network device may obtain an air interface delay between the pRRU-1 and the pRRU-2 through calculation based on the foregoing formula (1) to formula (4). Therefore, the first network device may determine a distance between the pRRU-1 and the pRRU-2 based on the air interface delay between the pRRU-1 and the pRRU-2, and may further determine location information of the pRRU-1 and the pRRU-2 based on the distance between the pRRU-1 and the pRRU-2. For example, if the location information of the pRRU-1 is preset, the first network device may determine the location information of the pRRU-2 based on the distance between the pRRU-1 and the pRRU-2 and the known location information of the pRRU-1.

It can be learned that the first network device may compensate for delays of receive channels of every two second network devices in the plurality of second network devices based on the first delays of the plurality of second network devices and the one or more second delays, and then determine an air interface delay between the second network devices based on compensated delays of the receive channels of every two second network devices. Then, the first network device may determine the location information of each second network device based on the air interface delay between the second network devices.

In an optional implementation, that the first network device determines the location information of each second network device based on the air interface delay between the second network devices includes: The first network device determines a distance between every two second network devices based on the air interface delay between the second network devices; and determines the location information of each second network device based on the distance between every two second network devices and location information of one or more fourth network devices. The fourth network device is a network device whose location information is known in the plurality of second network devices.

In other words, the first network device determines the distance between every two second network devices based on the air interface delay between the second network devices, and then determines location information of another network device in the plurality of second network devices based on the distance between every two second network devices and known location information of a small quantity of second network devices.

In an optional implementation, that the first network device determines the location information of each second network device based on the distance between every two second network devices and the location information of the one or more fourth network devices includes: The first network device determines a spatial topology structure between the plurality of second network devices based on the distance between every two second network devices and beam information of the one or more optimal beam pairs of each second network device; and determines the location information of each second network device based on the distance between every two second network devices, the spatial topology structure, and the location information of the one or more fourth network devices.

It may be understood that the first network device determines the spatial topology structure between the plurality of second network devices, in other words, a relative location structure relationship between the second network devices, based on the distance between every two network devices and the beam information of the one or more optimal beam pairs of each second network device by using a multidimensional scaling technology.

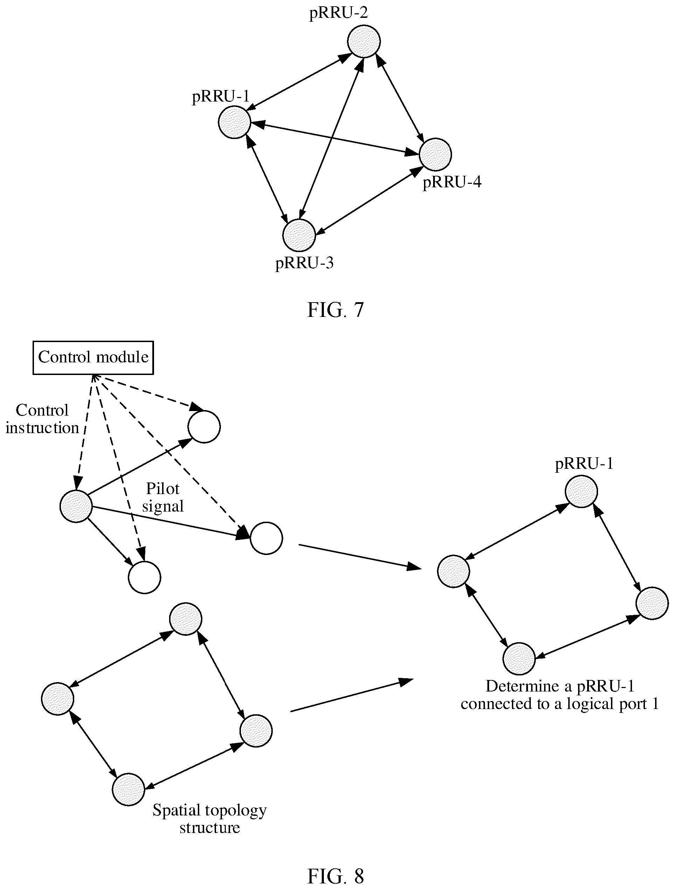

For example, the plurality of second network devices include a pRRU-1, a pRRU-2, a pRRU-3, and a pRRU-4. The first network device determines a spatial topology structure, as shown in FIG. 7, between four pRRUs based on a distance between every two pRRUs and beam information of one or more optimal beam pairs of each pRRU by using the multidimensional scaling technology. FIG. 7 is a schematic of the spatial topology structure between the four pRRUs.

Then, the first network device performs rigid body transformation operations such as translation, mirroring, and rotation on a diagram of the spatial topology structure between the plurality of second network devices based on the distance between every two second network devices, the spatial topology structure between the plurality of second network devices, and planned location information of a small quantity of second network devices in the plurality of second network devices, to determine the location information of each second network device.

It can be learned that, in comparison with a manner in which the location information of each second network device is determined through manual measurement, in the implementation in which the first network device determines the location information of each second network device, efficiency of determining the location information of each second network device may be improved, and accuracy of the location information of each second network device may be improved.

In an optional implementation, the first network device may further determine, based on a plurality of logical ports of a fifth network device, a second network device corresponding to each of the plurality of logical ports, that is, determine a connection relationship between each logical port and the second network device. The fifth network device is a network device controlling the plurality of second network devices. For example, the fifth network device is an RHUB.

It may be understood that the first network device specifies, based on the logical port of the fifth network device, a specific second network device to send the pilot signal. The first network device obtains a distance from the second network device to another network device through measurement of a received signal and an air interface delay performed by a network device other than the second network device in the plurality of second network devices. Then, the first network device determines a location of the second network device in the spatial topology structure with reference to the spatial topology structure between the plurality of second network devices, and further determines a second network device corresponding to a specified logical port, that is, determines a second network device connected to the logical port.

For example, FIG. 8 is a diagram of determining, by the first network device, a pRRU-1 corresponding to a logical port 1. As shown in FIG. 8, the first network device controls, by using a control module, a pRRU connected to the logical port 1 to send the pilot signal to another pRRU, and may determine a distance between the pRRU-1 connected to the logical port 1 and the another pRRU, and then determine, based on a spatial topology structure between the pRRU-1 to a pRRU-4, a location of the pRRU-1 connected to the logical port 1 shown in FIG. 8.

In this implementation, the first network device may determine a connection relationship between a logical port of an RHUB and each pRRU, and no manual onsite testing is required. This may improve efficiency of searching for and identifying a faulty pRRU in a subsequent operation and maintenance process.

In this embodiment of this application, the second network device sends the first information and the second information to each of the plurality of second network devices, where the first information indicates the second network device to determine the first delay of the pilot signal passing through the transmit channel and the receive channel of the second network device, and the second information indicates the second network device to send the pilot signal to the one or more third network devices, and receive the pilot signal from the one or more third network devices. Each of the plurality of second network devices receives the first information and the second information. Each second network device determines the first delay based on the pilot signal, and determines the one or more second delays by receiving the pilot signal. Each second network device feeds back the first delay of the second network device and the one or more second delays to the first network device. Therefore, the first network device determines the location information of each second network device based on the air interface delay between the second network devices, where the air interface delay between the second network devices is determined based on the first delay of each second network device and the one or more second delays.

The first network device may determine the location information of each of the plurality of second network devices by using the first delay and the one or more second delays that are fed back by each second network device. In comparison with a manner in which the location information of each second network device is determined through manual measurement, in this manner, efficiency of determining the location information of the plurality of second network devices may be improved, and accuracy of the location information of each second network device may be improved.

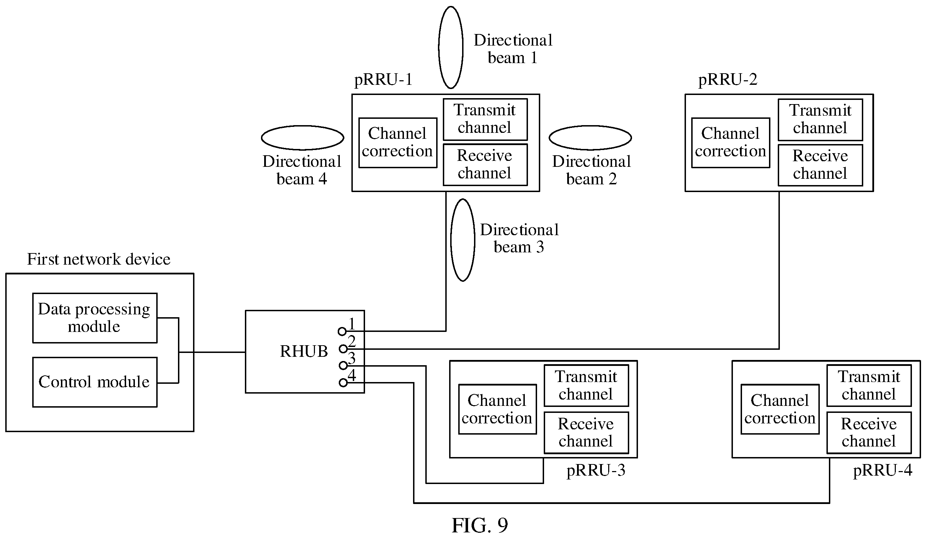

FIG. 9 is a diagram of a system architecture by using an example in which the plurality of second network devices include a pRRU-1, a pRRU-2, a pRRU-3, and a pRRU-4, and the fifth network device is an RHUB. As shown in FIG. 9, the first network device includes a control module and a data processing module. The control module and the data processing module of the first network device are connected to the RHUB, and four logical ports of the RHUB are respectively connected to the pRRU-1, the pRRU-2, the pRRU-3, and the pRRU-4. Each of the pRRU-1, the pRRU-2, the pRRU-3, and the pRRU-4 includes a channel correction module, a transmit channel, and a receive channel.

The control module of the first network device is configured to schedule each pRRU to send or receive the pilot signal in a specified slot, that is, the first network device sends the first information and the second information to each pRRU by using the control module. In addition, the control module of the first network device is further configured to switch, select, and schedule a directional beam of each pRRU. The data processing module of the first network device is configured to: collect a measurement result of each pRRU, construct a spatial topology architecture between a plurality of pRRUs based on measurement results of the plurality of pRRUs, and determine location information of each pRRU. In other words, the data processing module of the first network device is configured to: receive a first delay of each pRRU and one or more second delays, construct the spatial topology architecture between the plurality of pRRUs based on first delays of the plurality of pRRUs and the one or more second delays, and determine the location information of each pRRU.

The channel correction module of each pRRU is configured to correct a delay of the receive channel, to be specific, is configured to compensate for delays of receive channels of the pRRU and another pRRU. The transmit channel of each pRRU is configured to transmit a signal, and the receive channel of each pRRU is configured to receive the signal. It can be further learned from FIG. 9 that, for the pRRU-1, the pRRU-1 may send a signal to another pRRU by using a directional beam 1, a directional beam 2, a directional beam 3, and a directional beam 4. For example, the pRRU-1 sends the pilot signal to the pRRU-2 by using the directional beam 1, the directional beam 2, the directional beam 3, and the directional beam 4. Similarly, the pRRU-1 may further send the signal to the pRRU-3 and the pRRU-4 by using the directional beam 1, the directional beam 2, the directional beam 3, and the directional beam 4.

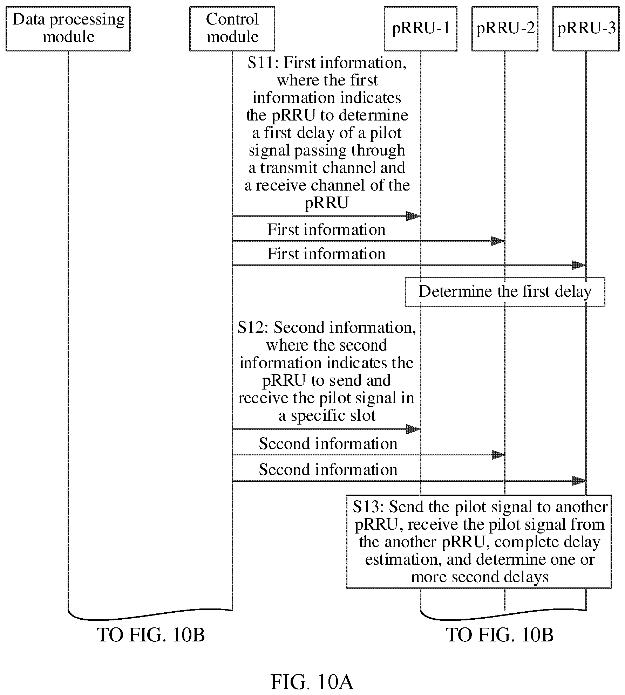

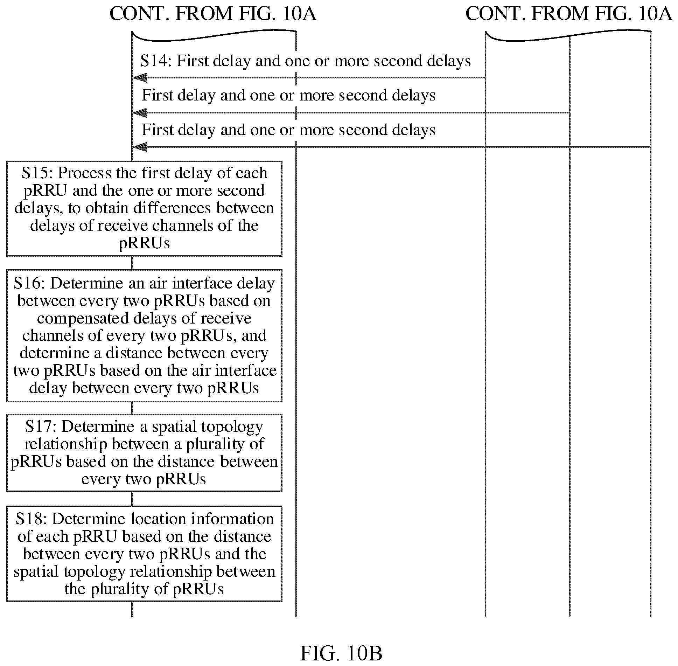

For example, the plurality of second network devices include a pRRU-1, a pRRU-2, and a pRRU-3, and the first network device includes a data processing module and a control module. FIG. 10A and FIG. 10B are a diagram of interaction between the data processing module, the control module, and each pRRU. As shown in FIG. 10A and FIG. 10B, the interaction between the data processing module, the control module, and each pRRU includes but is not limited to the following steps.

S11: The first network device sends the first information to each pRRU by using the control module, where the first information indicates the pRRU to determine a first delay of the pilot signal passing through a transmit channel and a receive channel of the pRRU. Correspondingly, each pRRU receives the first information, and starts a channel correction module of the pRRU, so that the pilot signal is looped back through an internal air interface of the pRRU, and the first delay is determined.

S12: The first network device sends the second information to each pRRU by using the control module, where the second information indicates the pRRU to send and receive the pilot signal in a specific slot. Correspondingly, each pRRU receives the second information.

S13: Each pRRU sends the pilot signal to another pRRU, receives the pilot signal from the another pRRU, completes delay estimation, and determines one or more second delays.

S14: Each pRRU feeds back the first delay and the one or more second delays to the first network device. Correspondingly, the first network device receives the first delay of each pRRU and the one or more second delays by using the data processing module.

S15: The data processing module of the first network device processes the first delay of each pRRU and the one or more second delays, to obtain differences between delays of receive channels of the pRRUs. To be specific, the first network device compensates for delays of receive channels of every two pRRUs based on the first delay of each pRRU and the one or more second delays.

S16: The data processing module of the first network device determines an air interface delay between every two pRRUs based on compensated delays of the receive channels of every two pRRUs, and determines a distance between every two pRRUs based on the air interface delay between every two pRRUs.

S17: The data processing module of the first network device determines a spatial topology relationship between a plurality of pRRUs based on the distance between every two pRRUs.

S18: The data processing module of the first network device determines location information of each pRRU based on the distance between every two pRRUs and the spatial topology relationship between the plurality of pRRUs.

It can be learned that the first network device may control, by using the control module, the plurality of pRRUs to send the pilot signal to each other and receive the pilot signal from each other, so that each pRRU determines the first delay and the one or more second delays, and feeds back the first delay of the pRRU and the one or more second delays to the first network device. Further, the first network device may determine the location information of each pRRU based on first delays of the plurality of pRRUs and the one or more second delays, and there is no need for operation and maintenance personnel to obtain the location information of each pRRU through onsite measurement. This may improve efficiency and accuracy of determining location information of the plurality of pRRUs.

For the technical solution described above, the following further describes a corresponding apparatus implementation solution.

To implement functions in the method provided in the foregoing embodiment of this application, the first network device and the second network device may include a hardware structure and/or a software module, to implement the foregoing functions in a form of a hardware structure, a software module, or a combination of a hardware structure and a software module. Whether a function in the foregoing functions is performed by using the hardware structure, the software module, or the combination of the hardware structure and the software module depends on particular applications and design constraint conditions of the technical solutions.

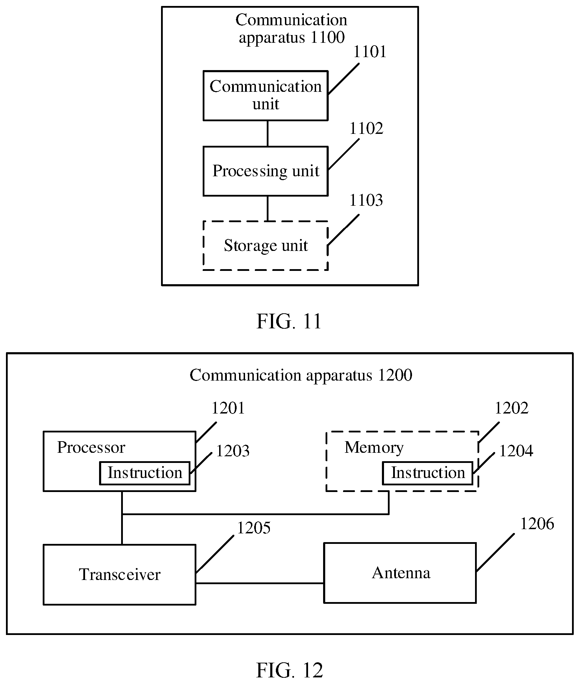

As shown in FIG. 11, an embodiment of this application provides a communication apparatus 1100. The communication apparatus 1100 may be a component (for example, an integrated circuit or a chip) of a first network device, or may be a component (for example, an integrated circuit or a chip) of a second network device. Alternatively, the communication apparatus 1100 may be another communication unit, configured to implement the method in the method embodiments of this application. The communication apparatus 1100 may include a communication unit 1101 and a processing unit 1102. Optionally, the communication apparatus may further include a storage unit 1103.

In a possible design, for example, one or more units in FIG. 11 may be implemented by one or more processors, or may be implemented by one or more processors and memories, or may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus 1100 has a function of implementing the first network device or the second network device described in embodiments of this application. For example, the communication apparatus 1100 includes a module, a unit, or a means (means) corresponding to the first network device performing steps related to the first network device described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiment.

In a possible design, a communication apparatus 1100 may include a processing unit 1102 and a communication unit 1101.

The communication unit 1101 is configured to send first information and second information to each of a plurality of second network devices.

The first information indicates the second network device to determine a first delay of a pilot signal passing through a transmit channel and a receive channel of the second network device.

The second information indicates the second network device to send the pilot signal to one or more third network devices, and receive the pilot signal from the one or more third network devices, where the third network device is a network device other than the second network device in the plurality of second network devices.

The communication unit 1101 is further configured to receive the first delay of each second network device and one or more second delays.

Each second delay of each second network device is a delay of the pilot signal from a transmit channel of each third network device to the receive channel of the second network device.

The processing unit 1102 is configured to determine location information of each second network device based on an air interface delay between second network devices, where the air interface delay between the second network devices is determined based on the first delay of each second network device and the one or more second delays.

In an optional implementation, the second information specifically indicates the second network device to send the pilot signal to each of the one or more third network devices by using different first beams respectively in a plurality of first slots, and receive the pilot signal from each third network device by using different second beams respectively in a plurality of second slots.

In an optional implementation, each second delay of each second network device is specifically a delay corresponding to an optimal beam pair; and the optimal beam pair is a beam pair with a largest received signal-to-noise ratio in a plurality of first beams and a plurality of second beams.

In an optional implementation, the communication unit 1101 is further configured to receive beam information of one or more optimal beam pairs of each second network device.

In an optional implementation, the processing unit 1102 determines the location information of each second network device based on the air interface delay between the second network devices, and is specifically configured to: determine a distance between every two second network devices based on the air interface delay between the second network devices; and determine the location information of each second network device based on the distance between every two second network devices and location information of one or more fourth network devices, where the fourth network device is a network device whose location information is known in the plurality of second network devices.

In an optional implementation, the processing unit 1102 determines the location information of each second network device based on the distance between every two second network devices and the location information of the one or more fourth network devices, and is specifically configured to: determine a spatial topology structure between the plurality of second network devices based on the distance between every two second network devices and the beam information of the one or more optimal beam pairs of each second network device; and determine the location information of each second network device based on the distance between every two second network devices, the spatial topology structure, and the location information of the one or more fourth network devices.

In an optional implementation, the processing unit 1102 is further configured to: compensate for delays of receive channels of every two second network devices in the plurality of second network devices based on the first delays of the plurality of second network devices and the one or more second delays; and determine the air interface delay between the second network devices based on compensated delays of the receive channels of every two second network devices.

In an optional implementation, the processing unit 1102 is further configured to determine, based on a plurality of logical ports of a fifth network device, a second network device corresponding to each of the plurality of logical ports, where the fifth network device is a network device controlling the plurality of second network devices.

In an optional implementation, the processing unit 1102 may include a data processing module and a control module of the first network device in FIG. 9.

This embodiment of this application and the foregoing method embodiments are based on a same concept, and bring same technical effects. For a specific principle, refer to the descriptions of the foregoing embodiments. Details are not described again.

In another possible design, a communication apparatus 1100 may include a processing unit 1102 and a communication unit 1101.

The communication unit 1101 is configured to receive first information and second information, where the first information indicates a second network device to determine a first delay of a pilot signal passing through a transmit channel and a receive channel of the second network device.

The second information indicates the second network device to send the pilot signal to one or more third network devices, and receive the pilot signal from the one or more third network devices, where the third network device is a network device other than the second network device in the plurality of second network devices.

The processing unit 1102 is configured to determine the first delay based on the pilot signal.

The communication unit 1101 is further configured to send the pilot signal to the one or more third network devices.

The communication unit 1101 is further configured to: receive the pilot signal from the one or more third network devices, and determine one or more second delays, where each of the one or more second delays is a delay of the pilot signal from a transmit channel of each third network device to the receive channel of the second network device.

The communication unit 1101 is further configured to send the first delay and the one or more second delays.

In an optional implementation, the second information specifically indicates the second network device to send the pilot signal to each of the one or more third network devices by using different first beams respectively in a plurality of first slots, and receive the pilot signal from each third network device by using different second beams respectively in a plurality of second slots.

The communication unit 1101 sends the pilot signal to the one or more third network devices, and is specifically configured to:

send the pilot signal to each of the one or more third network devices by using the different first beams respectively in the plurality of first slots.

The communication unit 1101 receives the pilot signal from the one or more third network devices, and is specifically configured to:

receive the pilot signal from each third network device by using the different second beams respectively in the plurality of second slots.

In an optional implementation, each second delay of the second network device is specifically a delay corresponding to an optimal beam pair; and the optimal beam pair is a beam pair with a largest received signal-to-noise ratio in a plurality of first beams and a plurality of second beams.

In an optional implementation, the communication unit 1101 is further configured to send beam information of one or more optimal beam pairs.

This embodiment of this application and the foregoing method embodiments are based on a same concept, and bring same technical effects. For a specific principle, refer to the descriptions of the foregoing embodiments. Details are not described again.

An embodiment of this application further provides a communication apparatus 1200. FIG. 12 is a diagram of a structure of the communication apparatus 1200. The communication apparatus 1200 may be a first network device, or may be a chip, a chip system, a processor, or the like that supports the first network device in implementing the foregoing method; or may be a second network device, or may be a chip, a chip system, a processor, or the like that supports the second network device in implementing the foregoing method. The apparatus may be configured to implement the method described in the foregoing method embodiments. For details, refer to the descriptions in the foregoing method embodiments.

The communication apparatus 1200 may include one or more processors 1201. The processor 1201 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1200 may include one or more memories 1202. The memory may store instructions 1204, and the instructions may be run on the processor 1201, to enable the communication apparatus 1200 to perform the method described in the foregoing method embodiments. Optionally, the memory 1202 may further store data. The processor 1201 and the memory 1202 may be separately disposed, or may be integrated together.

The memory 1202 may include but is not limited to a non-volatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable compact disc read-only memory (Compact Disc Read-Only Memory, CD-ROM), or the like.

Optionally, the communication apparatus 1200 may further include a transceiver 1205 and an antenna 1206. The transceiver 1205 may be referred to as a transceiver unit, a transceiver machine, a transceiver circuit, or the like, and is configured to implement a transceiver function. The transceiver 1205 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1200 is a first network device. The transceiver 1205 is configured to perform S101 and S105 in the location determining method. The processor 1201 is configured to perform S106 in the location determining method.

The communication apparatus 1200 is a second network device. The transceiver 1205 is configured to perform S101, S103, and S105 in the location determining method. The processor 1201 is configured to perform S102 and S104 in the location determining method.

In another possible design, the processor 1201 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1201 may store instructions 1203. When the instructions 1203 are run on the processor 1201, the communication apparatus 1200 is enabled to perform the method described in the foregoing method embodiments. The instructions 1203 may be fixed into the processor 1201. In this case, the processor 1201 may be implemented by hardware.

In still another possible design, the communication apparatus 1200 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in embodiments of this application is not limited thereto, and the structure of the communication apparatus may not be limited by FIG. 12. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (modulator); or
(4) a module that can be embedded in another device.

In embodiments of this application, the communication apparatus and the chip may further perform implementations of the communication apparatus 1100. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing method embodiments shown in the location determining method are based on a same concept, and bring same technical effects. For a specific principle, refer to the descriptions of the foregoing embodiments shown in the location determining method. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes one or more network devices and one or more terminal devices. In another possible design, the system may further include another device that interacts with the network device and the terminal device in the solutions provided in this application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A location determining method, wherein the method comprises:

   sending first information and second information to each of a plurality of second network devices, wherein the first information indicates the second network device to determine a first delay of a pilot signal passing through a transmit channel and a receive channel of the second network device; and
   the second information indicates the second network device to send the pilot signal to one or more third network devices, and receive the pilot signal from the one or more third network devices, wherein the third network device is a network device other than the second network device in the plurality of second network devices;
   receiving the first delay of each second network device and one or more second delays, wherein each second delay of each second network device is a delay of the pilot signal from a transmit channel of each third network device to the receive channel of the second network device; and
   determining location information of each second network device based on an air interface delay between second network devices, wherein the air interface delay between the second network devices is determined based on the first delay of each second network device and the one or more second delays.

2. The method according to claim 1, wherein
   the second information specifically indicates the second network device to send the pilot signal to each of the one or more third network devices by using different first beams respectively in a plurality of first slots, and receive the pilot signal from each third network device by using different second beams respectively in a plurality of second slots.

3. The method according to claim 2, wherein

   each second delay of each second network device is specifically a delay corresponding to an optimal beam pair; and
   the optimal beam pair is a beam pair with a largest received signal-to-noise ratio in the plurality of first beams and the plurality of second beams.

4. The method according to claim 3, wherein the method further comprises:
   receiving beam information of one or more optimal beam pairs of each second network device.

5. The method according to any one of claims 1 to 4, wherein the determining location information of each second network device based on an air interface delay between second network devices comprises:

   determining a distance between every two second network devices based on the air interface delay between the second network devices; and
   determining the location information of each second network device based on the distance between every two second network devices and location information of one or more fourth network devices, wherein the fourth network device is a network device whose location information is known in the plurality of second network devices.

6. The method according to claim 5, wherein the determining the location information of each second network device based on the distance between every two second network devices and location information of one or more fourth network devices comprises:

   determining a spatial topology structure between the plurality of second network devices based on the distance between every two second network devices and the beam information of the one or more optimal beam pairs of each second network device; and
   determining the location information of each second network device based on the distance between every two second network devices, the spatial topology structure, and the location information of the one or more fourth network devices.

7. The method according to any one of claims 1 to 6, wherein the method further comprises:

compensating for delays of receive channels of every two second network devices in the plurality of second network devices based on the first delays of the plurality of second network devices and the one or more second delays; and

determining the air interface delay between the second network devices based on compensated delays of the receive channels of every two second network devices.

8. The method according to any one of claims 1 to 7, wherein the method further comprises:

determining, based on a plurality of logical ports of a fifth network device, a second network device corresponding to each of the plurality of logical ports, wherein

the fifth network device is a network device controlling the plurality of second network devices.

9. A location determining method, wherein the method comprises:

receiving first information and second information, wherein the first information indicates a second network device to determine a first delay of a pilot signal passing through a transmit channel and a receive channel of the second network device; and

the second information indicates the second network device to send the pilot signal to one or more third network devices, and receive the pilot signal from the one or more third network devices, wherein the third network device is a network device other than the second network device in the plurality of second network devices;

determining the first delay based on the pilot signal;

sending the pilot signal to the one or more third network devices;

receiving the pilot signal from the one or more third network devices, and determining one or more second delays, wherein each of the one or more second delays is a delay of the pilot signal from a transmit channel of each third network device to the receive channel of the second network device; and

sending the first delay and the one or more second delays.

10. The method according to claim 9, wherein

the second information specifically indicates the second network device to send the pilot signal to each of the one or more third network devices by using different first beams respectively in a plurality of first slots, and receive the pilot signal from each third network device by using different second beams respectively in a plurality of second slots;

the sending the pilot signal to the one or more third network devices comprises:

sending the pilot signal to each of the one or more third network devices by using the different first beams respectively in the plurality of first slots; and

the receiving the pilot signal from the one or more third network devices comprises:

receiving the pilot signal from each third network device by using the different second beams respectively in the plurality of second slots.

11. The method according to claim 10, wherein

each second delay of the second network device is specifically a delay corresponding to an optimal beam pair; and

the optimal beam pair is a beam pair with a largest received signal-to-noise ratio in the plurality of first beams and the plurality of second beams.

12. The method according to claim 11, wherein the method further comprises:
sending beam information of one or more optimal beam pairs.

13. A communication apparatus, wherein the apparatus comprises a processing unit and a communication unit;

the communication unit is configured to send first information and second information to each of a plurality of second network devices, wherein

the first information indicates the second network device to determine a first delay of a pilot signal passing through a transmit channel and a receive channel of the second network device; and

the second information indicates the second network device to send the pilot signal to one or more third network devices, and receive the pilot signal from the one or more third network devices, wherein the third network device is a network device other than the second network device in the plurality of second network devices;

the communication unit is further configured to receive the first delay of each second network device and one or more second delays, wherein each second delay of each second network device is a delay of the pilot signal from a transmit channel of each third network device to the receive channel of the second network device; and

the processing unit is configured to determine location information of each second network device based on an air interface delay between second network devices, wherein the air interface delay between the second network devices is determined based on the first delay of each second network device and the one or more second delays.

**14.** The apparatus according to claim 13, wherein
the second information specifically indicates the second network device to send the pilot signal to each of the one or more third network devices by using different first beams respectively in a plurality of first slots, and receive the pilot signal from each third network device by using different second beams respectively in a plurality of second slots.

**15.** The apparatus according to claim 14, wherein

each second delay of each second network device is specifically a delay corresponding to an optimal beam pair; and
the optimal beam pair is a beam pair with a largest received signal-to-noise ratio in the plurality of first beams and the plurality of second beams.

**16.** The apparatus according to claim 15, wherein the communication unit is further configured to:
receive beam information of one or more optimal beam pairs of each second network device.

**17.** The apparatus according to any one of claims 13 to 16, wherein the processing unit determines the location information of each second network device based on the air interface delay between the second network devices, and is specifically configured to:

determine a distance between every two second network devices based on the air interface delay between the second network devices; and
determine the location information of each second network device based on the distance between every two second network devices and location information of one or more fourth network devices, wherein
the fourth network device is a network device whose location information is known in the plurality of second network devices.

**18.** The apparatus according to claim 17, wherein the processing unit determines the location information of each second network device based on the distance between every two second network devices and the location information of the one or more fourth network devices, and is specifically configured to:

determine a spatial topology structure between the plurality of second network devices based on the distance between every two second network devices and the beam information of the one or more optimal beam pairs of each second network device; and
determine the location information of each second network device based on the distance between every two second network devices, the spatial topology structure, and the location information of the one or more fourth network devices.

**19.** The apparatus according to any one of claims 13 to 18, wherein the processing unit is further configured to:

compensate for delays of receive channels of every two second network devices in the plurality of second network devices based on the first delays of the plurality of second network devices and the one or more second delays; and
determine the air interface delay between the second network devices based on compensated delays of the receive channels of every two second network devices.

**20.** The apparatus according to any one of claims 13 to 19, wherein the processing unit is further configured to:

determine, based on a plurality of logical ports of a fifth network device, a second network device corresponding to each of the plurality of logical ports, wherein

the fifth network device is a network device controlling the plurality of second network devices.

21. A communication apparatus, wherein the apparatus comprises a communication unit and a processing unit;

the communication unit is configured to receive first information and second information, wherein the first information indicates a second network device to determine a first delay of a pilot signal passing through a transmit channel and a receive channel of the second network device; and
the second information indicates the second network device to send the pilot signal to one or more third network devices, and receive the pilot signal from the one or more third network devices, wherein the third network device is a network device other than the second network device in the plurality of second network devices;
the processing unit is configured to determine the first delay based on the pilot signal;
the communication unit is further configured to send the pilot signal to the one or more third network devices;
the communication unit is further configured to: receive the pilot signal from the one or more third network devices, and determine one or more second delays, wherein each of the one or more second delays is a delay of the pilot signal from a transmit channel of each third network device to the receive channel of the second network device; and
the communication unit is further configured to send the first delay and the one or more second delays.

22. The apparatus according to claim 21, wherein the second information specifically indicates the second network device to send the pilot signal to each of the one or more third network devices by using different first beams respectively in a plurality of first slots, and receive the pilot signal from each third network device by using different second beams respectively in a plurality of second slots;
the communication unit sends the pilot signal to the one or more third network devices, and is specifically configured to:

send the pilot signal to each of the one or more third network devices by using the different first beams respectively in the plurality of first slots; and
the communication unit receives the pilot signal from the one or more third network devices, and is specifically configured to:
receive the pilot signal from each third network device by using the different second beams respectively in the plurality of second slots.

23. The apparatus according to claim 22, wherein

each second delay of the second network device is specifically a delay corresponding to an optimal beam pair; and
the optimal beam pair is a beam pair with a largest received signal-to-noise ratio in the plurality of first beams and the plurality of second beams.

24. The apparatus according to claim 23, wherein the communication unit is further configured to:
send beam information of one or more optimal beam pairs.

25. A communication apparatus, comprising a processor and a transceiver, wherein the transceiver is configured to communicate with another communication apparatus, and the processor is configured to run a program, so that the communication apparatus implements the method according to any one of claims 1 to 8.

26. A communication apparatus, comprising a processor and a transceiver, wherein the transceiver is configured to communicate with another communication apparatus, and the processor is configured to run a program, so that the communication apparatus implements the method according to any one of claims 9 to 12.

27. A communication apparatus, comprising a unit configured to implement the method according to any one of claims 1 to 8.

28. A communication apparatus, comprising a unit configured to implement the method according to any one of claims 9 to 12.

29. A communication system, comprising:

the apparatus according to any one of claims 13 to 20 and the apparatus according to any one of claims 21 to 24;

the communication apparatus according to claim 25 and the communication apparatus according to claim 26; or the communication apparatus according to claim 27 and the communication apparatus according to claim 28.

30. A computer-readable storage medium, wherein the computer-readable storage medium is configured to store instructions, and when the instructions are run on a computer, the method according to any one of claims 1 to 8 is performed, or the method according to any one of claims 9 to 12 is performed.

31. A computer program product comprising instructions, wherein when the computer program product runs on a computer, the method according to any one of claims 1 to 8 is performed, or the method according to any one of claims 9 to 12 is performed.

FIG. 1

FIG. 2

FIG. 3a

RHUB

4

1  2  3

pRRU-1       pRRU-2       pRRU-3       pRRU-4

Logical cell-1 | Logical cell-2 | Logical cell-1 | Logical cell-2

FIG. 3b

```
┌─────────────┐                                    ┌─────────────┐
│ First network│                                   │   Second     │
│   device    │                                    │network device│
└─────────────┘                                    └─────────────┘
```

S101: First information and second information,
where the first information indicates the second
network device to determine a first delay of a
pilot signal passing through a transmit channel
and a receive channel of the second network
device, and the second information indicates the
second network device to send the pilot signal to
one or more third network devices, and receive
the pilot signal from the one or more third
network devices

S102: Determine the first delay based
on the pilot signal

S103: Send the pilot signal to the one
or more third network devices

S104: Receive the pilot signal from the
one or more third network devices, and
determine one or more second delays,
where each of the one or more second
delays is a delay of the pilot signal
from a transmit channel of each third
network device to the receive channel
of the second network device

S105: First delay and one or more second delays

S106: Determine location information
of each second network device based on
an air interface delay between second
network devices, where the air interface
delay between the second network
devices is determined based on the first
delay of each second network device
and the one or more second delays

FIG. 4

Control module

First information and
second information

First information and
second information

$T_1$

Transmit channel

$H_{12}$    $H_{21}$

$C_1$    $C_2$

$T_2$

Transmit channel

$R_1$

Receive channel

$R_2$

Receive channel

pRRU-1

pRRU-2

FIG. 5

Control module

Second
information

Directional
beam 1

pRRU-1

Directional
beam 4

Directional
beam 2

Directional
beam 3

FIG. 6

pRRU-2

pRRU-1

pRRU-4

pRRU-3

FIG. 7

Control module

Control
instruction

Pilot
signal

pRRU-1

Spatial topology
structure

Determine a pRRU-1
connected to a logical port 1

FIG. 8

FIG. 9

| Data processing module | Control module | pRRU-1 | pRRU-2 | pRRU-3 |
|---|---|---|---|---|

S11: First information, where the first information indicates the pRRU to determine a first delay of a pilot signal passing through a transmit channel and a receive channel of the pRRU

First information

First information

Determine the first delay

S12: Second information, where the second information indicates the pRRU to send and receive the pilot signal in a specific slot

Second information

Second information

S13: Send the pilot signal to another pRRU, receive the pilot signal from the another pRRU, complete delay estimation, and determine one or more second delays

TO FIG. 10B

TO FIG. 10B

FIG. 10A

CONT. FROM FIG. 10A                    CONT. FROM FIG. 10A

S14: First delay and one or more second delays

First delay and one or more second delays

First delay and one or more second delays

S15: Process the first delay of each pRRU and the one or more second delays, to obtain differences between delays of receive channels of the pRRUs

S16: Determine an air interface delay between every two pRRUs based on compensated delays of receive channels of every two pRRUs, and determine a distance between every two pRRUs based on the air interface delay between every two pRRUs

S17: Determine a spatial topology relationship between a plurality of pRRUs based on the distance between every two pRRUs

S18: Determine location information of each pRRU based on the distance between every two pRRUs and the spatial topology relationship between the plurality of pRRUs

FIG. 10B

Communication
apparatus 1100
1101

Communication
unit

1102

Processing unit

1103

Storage unit

FIG. 11

Communication apparatus 1200

1201

Processor

1203

Instruction

1202

Memory

1204

Instruction

1205

Transceiver

1206

Antenna

FIG. 12

## INTERNATIONAL SEARCH REPORT

| International application No. |
| --- |
| **PCT/CN2023/134181** |

**A.    CLASSIFICATION OF SUBJECT MATTER**

H04W 64/00(2009.01)i

According to International Patent Classification (IPC) or to both national classification and IPC

**B.    FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXTC; CNKI; 3GPP: 基站, 节点, 时延, 延时, 时间差, 位置, 定位, 拓扑, 测量, 确定, 导频, 信噪比, 波束, UE, BS, base station, node, delay, arrival, TDOA, TOA, position, Topology, pRRU, MIMO, SINR, beam

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115226026 A (ZTE CORP.) 21 October 2022 (2022-10-21)<br>description, paragraphs [0006]-[0235] | 1-31 |
| A | CN 101212780 A (HUAWEI TECHNOLOGIES CO., LTD.) 02 July 2008 (2008-07-02)<br>entire document | 1-31 |
| A | CN 107277121 A (INSTITUTE OF INFORMATION ENGINEERING, CHINESE ACADEMY OF SCIENCES) 20 October 2017 (2017-10-20)<br>entire document | 1-31 |
| A | US 2020403876 A1 (AT & T INTELLECTUAL PROPERTY I, L.P.) 24 December 2020 (2020-12-24)<br>entire document | 1-31 |

☑ Further documents are listed in the continuation of Box C.      ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **02 February 2024** | **18 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/134181** |

### C.    DOCUMENTS CONSIDERED TO BE RELEVANT

| Category* | Citation of document, with indication, where appropriate, of the relevant passages | Relevant to claim No. |
| --- | --- | --- |
| A | 李文彬 (LI, Wenbin). "5G高精度UTDOA定位算法在工业互联网中的探索及实践 (Exploration and Practice of 5G High-precision UTDOA Algorithm in Industrial In-ternet Field)" <br> 长江信息通信 (*Changjiang Information & Communications*), <br> 22 November 2022 (2022-11-22), <br>   entire document | 1-31 |

Form PCT/ISA/210 (second sheet) (July 2022)

**INTERNATIONAL SEARCH REPORT**
Information on patent family members

International application No.

**PCT/CN2023/134181**

| Patent document cited in search report | | | Publication date (day/month/year) | Patent family member(s) | | | Publication date (day/month/year) |
|---|---|---|---|---|---|---|---|
| CN | 115226026 | A | 21 October 2022 | None | | | |
| CN | 101212780 | A | 02 July 2008 | None | | | |
| CN | 107277121 | A | 20 October 2017 | None | | | |
| US | 2020403876 | A1 | 24 December 2020 | US | 10931536 | B2 | 23 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211531315X